# DEMANDE DE BREVET EUROPEEN

(11) **EP 1 090 707 A1**
(43) Date de publication de la demande: **11.04.2001**
(21) Numéro de dépôt: 00402571.4
(22) Date de dépôt: 18.09.2000
(51) Int. Cl.: B23K 9/173

(54) **Procédé et installation de soudage MIG de l'aluminium de ses alliages**

(30) Priorité: 05.10.1999 FR 9912403
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Lefebvre, Philippe, 95310 Saint Ouen l'Aumone (FR); Biskup, Laurent, 27140 Gisors (FR)
(74) Mandataire: Le Moenner, Gabriel

(57) **Abrégé**

L'invention concerne un procédé et une installation de soudage MIG de l'aluminium et de ses alliages, mettant en oeuvre une protection gazeuse de la zone soudée composée d'un flux central de gaz constitué d'argon et/ou d'oxygène, et d'un flux gazeux périphérique constitué d'argon ou d'un mélange d'argon et d'hélium. Le procédé de soudage MIG de l'invention permet de souder efficacement des pièces en aluminium ou en alliages d'aluminium grâce à une amélioration de la pénétration de la soudure et du mouillage du cordon de soudure, c'est-à-dire de l'angle de raccordement du cordon de soudure sur les pièces soudées.

## Description

La présente invention concerne un procédé et une installation de soudage MIG de l'aluminium et de ses alliages avec double protection gazeuse.

En soudage à l'arc électrique, les procédés de soudage MIG (Metal Inert Gas) sont largement utilisés pour souder, différents matériaux métalliques, tels les aciers au carbone, les aciers inoxydables, l'aluminium, le nickel, le cuivre, le titane, le zirconium et leurs alliages.

Lors du soudage MIG proprement dit, on génère un arc électrique entre une électrode, à savoir un fil fusible, et les pièces à souder ensemble, de manière à obtenir une fusion dudit fil fusible par la chaleur générée par l'arc électrique et, de là, la formation d'un joint de soudure entre les pièces à souder.

Le métal constituant le joint de soudure provient donc essentiellement du fil fusible et, en partie, des bords de pièces subissant une fusion au niveau de leur ligne d'assemblage, c'est-à-dire la zone de liaison de "métal fondu" et la zone thermiquement affectée située de part et d'autre de cette zone de liaison formée de "métal fondu".

Afin d'éviter ou minimiser les contaminations du joint de soudure en cours de formation par des impuretés atmosphériques susceptibles d'être présentes dans l'air ambiant, il est d'usage, en soudage MIG, de protéger tout ou partie du joint de soudure avec une protection gazeuse constituée d'un gaz ou d'un mélange gazeux distribué par la torche de soudage utilisée pour mettre en oeuvre le procédé, c'est-à-dire pour amener et guider le fil fusible de soudage provenant d'une réserve de fil ou analogue.

Ainsi, le document US-A-4,572,942 décrit un procédé de soudage à l'arc avec fil fusible et protection gazeuse, c'est-à-dire un procédé MIG, dans lequel la protection gazeuse est un mélange quaternaire constitué de 40-70% d'argon, de 25 à 60% d'hélium, de 3 à 10% de dioxyde de carbone et de 0,1 à 2% d'oxygène.

En outre, des torches de soudage sont aussi décrites par les documents DE-A-2143466, US-A-3,676,640 US-A-3,155,811, US-A-3,007,032 et US-A-3,239,647.

Par ailleurs, il a été mis en évidence que des améliorations des qualités du joint de soudure pouvaient être obtenues en procédant à une double injection de gaz de protection.

Ainsi, le document "Effect of a two-layer annular flow of shielding gases on the process of consumable elecrode welding" ; Welding International 1996, 10 (10) 813-815 décrit une torche de soudage à double flux gazeux, c'est-à-dire une torche comportant une buse centrale délivrant un flux d'argon et une buse périphérique, agencée coaxialement à la buse centrale, amenant un flux de dioxyde de carbone. Dans ce cas, le fil fusible est, quant à lui, amené par une gaine située à l'intérieur de la buse centrale, c'est-à-dire que le flux d'argon chemine à l'extérieur de la gaine d'amenée de fil.

De façon analogue, le document "Metal Transfer and Spatter Loss in Double Gas Shielded Metal Arc Welding" ; Transactions of the Japan Welding Society, Vol. 19, N°2, Octobre 1988, P. 347-353, décrit également une torche double-flux de ce type utilisée avec les mêmes gaz.

Toutefois, si procéder à une double injection de gaz permet d'améliorer les qualités de la soudure, il s'avère que cette technique complique considérablement l'architecture de la torche de soudage, étant donné qu'il est nécessaire, dans ce cas, que la torche soit dotée de deux buses concentriques agencées coaxialement autour de la gaine d'amenée du fil fusible de soudage constituant une électrode consommable.

Pour tenter de résoudre ce problème d'augmentation de la complexité de la torche, les documents US-A-4,731,518 et EP-A-480837 enseignent de supprimer une des deux buses de distribution de gaz et d'introduire le gaz destiné à constituer le flux gazeux central, directement dans le tube-contact électriquement conducteur située à l'extrémité de la gaine d'amenée du fil de soudage, en introduisant le dit gaz soit à proximité et en amont de la torche, c'est-à-dire dans la gaine, soit très en amont de la torche, c'est-à-dire à l'extrémité amont de la gaine d'amenée de fil ou, à proximité ou, au niveau de la réserve de fil fusible ; ceci permettant d'inerter le fil dans la totalité de la gaine d'amenée de fil.

Dans ce cas, la distribution du flux gazeux périphérique est opérée normalement par le biais d'une unique buse de distribution agencée autour de la gaine d'amenée de fil.

D'après ces documents, tout type de gaz peut être utilisé, par exemple l'argon, le dioxyde de carbone ou l'hélium, ou les mélanges de ces gaz avec de l'oxygène.

Au vu de cet état de la technique, le problème qui se pose est d'améliorer les procédés de soudage MIG connus de sorte de pouvoir souder efficacement des pièces en aluminium ou en alliages d'aluminium grâce à une amélioration de la pénétration de la soudure et du mouillage du cordon de soudure, c'est-à-dire de l'angle de raccordement du cordon de soudure sur les pièces soudées.

En d'autres termes, la présente invention vise à améliorer encore les qualités des soudures obtenues par procédé MIG sur l'aluminium et alliages d'aluminium.

La présente invention concerne alors un procédé de soudage MIG de l'aluminium et des alliages d'aluminium mettant en oeuvre une torche de soudage comportant un corps de torche muni d'une buse de distribution de gaz et d'un tube-contact agencé dans le corps de torche et débouchant à l'intérieur de ladite buse de distribution, ledit tube-contact étant électriquement conducteur et étant traversé par une électrode consommable métallique, dans lequel :
a) on fait circuler un premier flux gazeux à travers ledit tube-contact et on fait circuler un deuxième flux gazeux à travers ladite buse de distribution, lesdits premier et deuxième flux gazeux étant dirigés vers la zone de soudage et constituant une atmosphère gazeuse de protection protégeant au moins une partie de ladite zone de soudage, ledit deuxième flux gazeux de protection étant distribué approximativement périphériquement audit premier flux gazeux de protection, de manière à obtenir deux flux gazeux approximativement concentriques,
b) on crée au moins un arc électrique entre ladite électrode consommable et ladite zone de soudage pour obtenir une fusion d'une partie de ladite électrode consommable métallique et un dépôt, au niveau de la zone de soudage, d'au moins une partie dudit métal fondu destiné à former au moins un joint de soudure, caractérisé en ce que
   - le premier flux gazeux est constitué d'argon, d'oxygène ou d'un mélange d'argon et d'oxygène, et
   - le deuxième flux gazeux est constitué d'argon ou d'un mélange d'argon et d'hélium.

Selon le cas, le procédé de l'invention peut comprendre l'une ou plusieurs des caractéristiques suivantes :
- le premier flux gazeux est constitué d'argon et le deuxième flux gazeux est constitué d'argon.
- le premier flux gazeux est constitué d'oxygène et le deuxième flux gazeux est constitué d'argon ou d'un mélange d'argon et d'hélium.
- le premier flux gazeux est constitué d'un mélange d'oxygène et d'argon, et le deuxième flux gazeux est constitué d'argon ou d'un mélange d'argon et d'hélium, de préférence le premier flux gazeux est constitué d'un mélange d'oxygène et d'argon contenant au plus 5% d'oxygène.
- le deuxième flux gazeux est constitué d'un mélange binaire d'argon et d'hélium contenant de 20 à 80% d'argon, et le reste étant de l'hélium.
- le premier flux gazeux est constitué d'un mélange binaire d'argon et d'oxygène contenant de 0,01 à 2% d'oxygène et le reste étant de l'argon, de préférence le mélange contient moins de 2% d'oxygène et le reste étant de l'argon.
- le rapport du débit du premier flux gazeux au débit du deuxième flux gazeux est de 0,01 : 15 à 4 : 15, de préférence de 0,03 : 15 à 0,5 : 15.
- l'électrode consommable est un fil fusible, de préférence un fil plein.
- le premier flux gazeux est introduit dans la gaine d'amenée de l'électrode consommable en un site localisé immédiatement en amont du corps de torche ou en un site localisé à proximité de l'extrémité amont de ladite gaine d'amenée de l'électrode.

Par ailleurs, l'invention porte aussi sur une installation de soudage MIG susceptible de mettre en oeuvre un procédé selon l'invention, comprenant :
- une torche de soudage comportant un corps de torche muni d'une buse de distribution de gaz, d'un tube-contact débouchant dans ladite buse de distribution au travers duquel le tube-contact passe une électrode consommable métallique ayant une forme de fil ;
- des moyens d'alimentation en courant électrique pour alimenter au moins ladite torche en courant électrique ;
- au moins une première source d'un premier gaz constitué d'argon, d'oxygène ou d'un mélange d'argon et d'oxygène ;
- au moins une deuxième source d'un deuxième gaz constitué d'argon ou d'un mélange d'argon et d'hélium ;
- au moins une source de fil fusible constituant l'électrode consommable ;
- des moyens d'amenée de fil permettant d'acheminer le fil fusible entre ladite source de fil fusible et ledit corps de torche, lesdits moyens d'amenée de fil comportant au moins une gaine formant manchon autour d'au moins une partie dudit fil et à l'intérieur de laquelle est acheminée ledit fil fusible ;
- des premiers moyens d'acheminement de gaz pour acheminer le premier flux gazeux entre ladite première source dudit premier gaz et un site localisé en amont du corps de torche ou à proximité de l'extrémité amont de ladite gaine entourant le fil ;
- des second moyens d'acheminement de gaz pour acheminer le premier flux gazeux entre ladite deuxième source dudit deuxième gaz et la buse de distribution de gaz équipant le corps de torche.

L'invention va maintenant être mieux comprise à l'aide d'exemples et en références aux figures annexées, données à titre illustratif mais non limitatif.

### Exemples

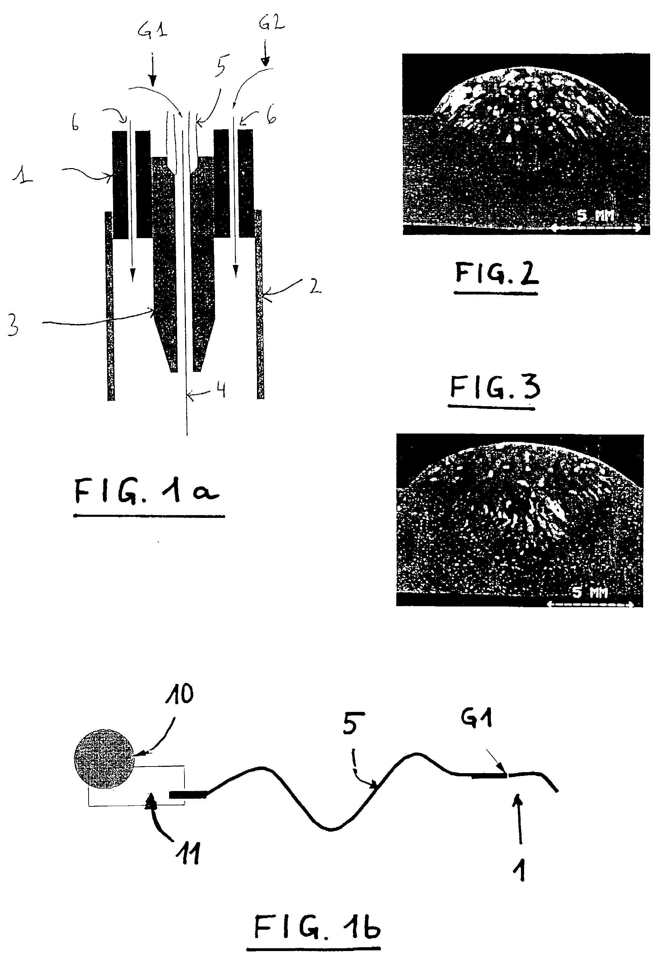

Les exemples ci-après ont été réalisés avec une torche de soudage MIG, telle que schématisée sur les figures 1a et 1b, laquelle comporte un corps de torche 1 équipé d'une buse 2 de distribution de gaz, à l'intérieur de laquelle débouche un tube-contact 3 électriquement conducteur.

Le tube-contact 3 est traversé par une électrode consommable 4, c'est-à-dire un fil fusible plein, acheminé jusqu'à la torche 1 à l'intérieur d'une gaine 5 d'amenée de fil dont l'extrémité amont est reliée à un dispositif 11 d'alimentation en fil fusible stocké sur une bobine 10 de fil de soudage et dont l'extrémité aval débouche dans le tube-contact 4, c'est-à-dire à l'extrémité amont dudit tube-contact 4 de la torche 1.

Afin de valider le procédé selon l'invention, des essais ont été réalisés en introduisant un gaz de protection (G2) uniquement dans la buse 2, via les orifices et passages 6, ou, à titre comparatif, à la fois dans la buse 2 via lesdits orifices et passages 6, et dans la gaine 5 et donc le tube-contact 4 (en Gl).

Les détails de ces essais et les résultats obtenus en soudage bord-à-bord et à plat de pièces d'aluminium (nuance 5086), de 6 mm d'épaisseur sont donnés dans le tableau suivant.

Il est à noter que la torche utilisée pour ces essais est une torche de soudage commercialisée par la Société LA SOUDURE AUTOGENE FRANCAISE sous la référence commerciale TM 700, laquelle est équipée d'une buse de 28 mm assurant une protection gazeuse efficace.

En outre, l'électrode consommable est un fil fusible plein de 1,2 mm de diamètre commercialisé par ladite même Société sous la référence commerciale NERTALIC 30.

**Tableau**

| Essai | Gaz dans buse | Gaz dans gaine et tube-contact | Gain en pénétration | Amélioration de la qualité du cordon |
|---|---|---|---|---|
| A | Argon | - | - | - |
| B | Argon | Argon | + 30 % | oui |
| C | Mélange argon + 1,4% d'oxygène | - | + 20 % | oui |
| D | Argon | Oxygène + Argon (<5%) | 30 à 50 % | oui |

Après comparaison des résultats obtenus, on constate que l'essai B conforme à l'invention (voir figure 3) conduit à une amélioration notable de la morphologie du cordon de soudage ainsi obtenu par comparaison à l'essai A selon l'art antérieur (voir figure 2).

En effet, l'essai B selon l'invention permet d'obtenir un gain de l'ordre de 30% en pénétration et un meilleur mouillage du cordon, c'est-à-dire un angle de raccordement plus obtus du cordon sur les pièces ainsi soudées.

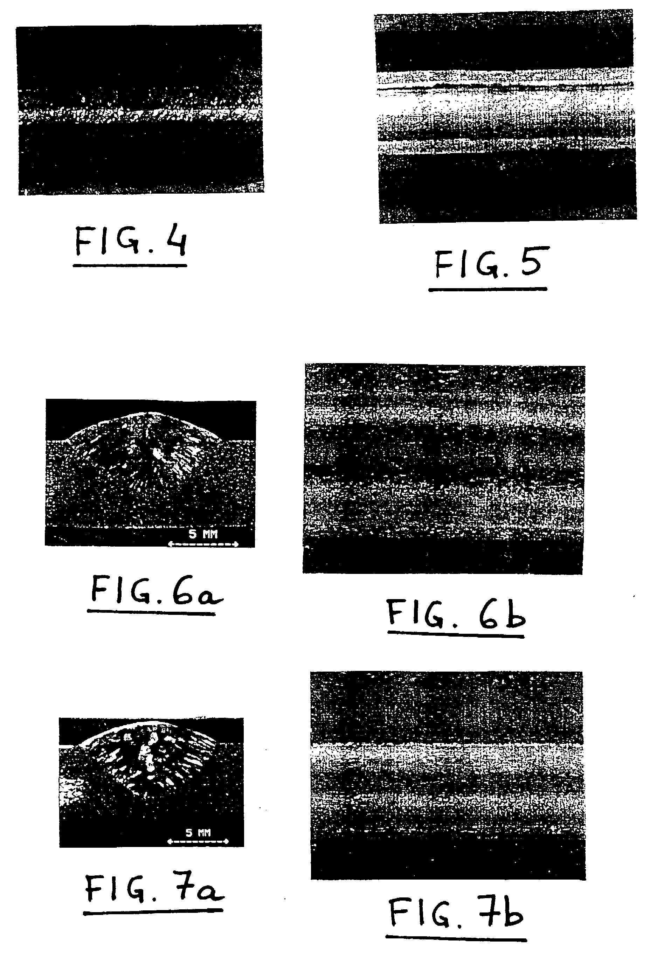

En outre, l'injection de gaz ou mélange gazeux conformément à l'invention permet non seulement d'accroître les performances au niveau du soudage, en particulier pénétration et mouillabilité de la soudure mais aussi de conduire à une nette amélioration de la qualité du cordon, ainsi que montré sur les figures 4 et 5.

La figure 4 représente le cordon de soudure (aspect brut de soudage) obtenu lors de l'assemblage des pièces métalliques selon l'essai A, alors que la figure 5 représente le cordon de soudure obtenu lors de l'essai B, c'est-à-dire selon l'invention.

Dans les deux cas, la vitesse du fil est de l'ordre de 13 m/min et la pulvérisation du métal fondu est sensiblement axiale.

Les améliorations constatées lors de la mise en oeuvre d'un procédé selon l'invention peuvent être la conséquence d'un arc électrique plus confiné, donc plus rigide et mieux protégé favorisant des mouvements de convection plus important du bain de fusion et une meilleure mouillabilité.

En fait, l'aspect du cordon obtenu figure 4 correspond à quelque chose de classiquement obtenu sur des alliages de la série 5000. La présence de taches noires sur le cordon est liée à la volatilisation du magnésium pendant l'opération de soudage. De même suivant le matériel utilisé et en particulier la torche, on remarque la présence d'une zone de décapage plus ou moins importante. Il est à noter qu'en règle générale, les soudeurs jugent la qualité de leurs soudures dans un premier temps sur l'aspect du cordon et ensuite par un contrôle radiographique ou autre si nécessaire.

Par ailleurs, les essais C et D ont portés, quant à eux, sur une injection d'un gaz contenant de l'argon en mélange avec 1,4% d'oxygène conformément à l'art antérieur (essai C) ou, à l'inverse, sur une injection d'argon en périphérie et d'argon en mélange avec de l'oxygène (<5 %) au centre, ledit mélange argon/oxygène étant introduit dans la gaine d'amenée du fil et distribué par le tube-contact de la torche (essai D), conformément à l'invention.

Les résultats obtenus sont montrés sur les figures 6a et 6b (essai C) et 7a et 7b (essai D), et résumés dans le tableau précédent.

Comme précédemment, on constate qu'en procédant conformément au procédé de l'invention (essai D), on améliore non seulement la mouillabilité et la pénétration, mais aussi l'aspect du cordon par rapport à un gaz de protection annulaire formé d'un mélange argon/oxygène (1,4% d'oxygène), conformément à l'art antérieur.

La présente invention présente, de plus, l'avantage de pouvoir être mise en oeuvre aussi bien en soudage MIG manuel qu'en soudage MIG automatique ou robotisé.

## Revendications

1. Procédé de soudage MIG de l'aluminium et des alliages d'aluminium mettant en oeuvre une torche de soudage comportant un corps de torche muni d'une buse de distribution de gaz et d'un tube-contact agencé dans le corps de torche et débouchant à l'intérieur de ladite buse de distribution, ledit tube-contact étant électriquement conducteur et étant traversé par une électrode consommable métallique, dans lequel :
a) on fait circuler un premier flux gazeux à travers ledit tube-contact et on fait circuler un deuxième flux gazeux à travers ladite buse de distribution, lesdits premier et deuxième flux gazeux étant dirigés vers la zone de soudage et constituant une atmosphère gazeuse de protection protégeant au moins une partie de ladite zone de soudage, ledit deuxième flux gazeux de protection étant distribué approximativement périphériquement audit premier flux gazeux de protection, de manière à obtenir deux flux gazeux approximativement concentriques,
b) on crée au moins un arc électrique entre ladite électrode consommable et ladite zone de soudage pour obtenir une fusion d'une partie de ladite électrode consommable métallique et un dépôt, au niveau de la zone de soudage, d'au moins une partie dudit métal fondu destiné à former au moins un joint de soudure, caractérisé en ce que
- le premier flux gazeux est constitué d'argon, d'oxygène ou d'un mélange d'argon et d'oxygène, et
- le deuxième flux gazeux est constitué d'argon ou d'un mélange d'argon et d'hélium.

2. Procédé selon la revendication 1, caractérisé en ce que le premier flux gazeux est constitué d'argon et le deuxième flux gazeux est constitué d'argon.

3. Procédé selon la revendication 1, caractérisé en ce que le premier flux gazeux est constitué d'oxygène et le deuxième flux gazeux est constitué d'argon ou d'un mélange d'argon et d'hélium.

4. Procédé selon la revendication 1, caractérisé en ce que le premier flux gazeux est constitué d'un mélange d'oxygène et d'argon, et le deuxième flux gazeux est constitué d'argon ou d'un mélange d'argon et d'hélium, de préférence le premier flux gazeux est constitué d'un mélange d'oxygène et d'argon contenant au plus 5% d'oxygène.

5. Procédé selon l'une des revendications 1,3 ou 4, caractérisé en ce que le deuxième flux gazeux est constitué d'un mélange d'argon et d'hélium contenant de 20 à 80% d'argon et le reste étant de l'hélium.

6. Procédé selon l'une des revendications 1,4 ou 5, caractérisé en ce que le premier flux gazeux est constitué d'un mélange d'argon et d'oxygène contenant de 0,01 à 2% d'oxygène et le reste étant de l'argon, de préférence le mélange contient moins de 2% d'oxygène et le reste étant de l'argon.

7. Procédé selon l'une des revendications 1 à 6, caractérisé en ce que le rapport du débit du premier flux gazeux au débit du deuxième flux gazeux est de 0,01 : 15 à 4 : 15, de préférence de 0,03 : 15 à 0,5 : 15.

8. Procédé selon l'une des revendications 1 à 7, caractérisé en ce que l'électrode consommable est un fil fusible, de préférence un fil plein.

9. Procédé selon l'une des revendications 1 à 8, caractérisé en ce que le premier flux gazeux est introduit dans la gaine d'amenée de l'électrode consommable en un site localisé immédiatement en amont du corps de torche ou en un site localisé à proximité de l'extrémité amont de ladite gaine d'amenée de l'électrode.

10. Installation de soudage MIG susceptible de mettre en oeuvre un procédé selon l'une des revendications 1 à 9, comprenant :
- une torche de soudage comportant un corps (1) de torche muni d'une buse (2) de distribution de gaz, d'un tube-contact (3) débouchant dans ladite buse (2) de distribution au travers duquel le tube-contact (3) passe une électrode consommable métallique ayant une forme de fil (4) ;
- des moyens d'alimentation en courant électrique pour alimenter au moins ladite torche en courant électrique ;
- au moins une première source d'un premier gaz (G1) constitué d'argon, d'oxygène ou d'un mélange d'argon et d'oxygène ;
- au moins une deuxième source d'un deuxième gaz (G2) constitué d'argon ou d'un mélange d'argon et d'hélium ;
- au moins une source (11) de fil (4) fusible constituant l'électrode consommable ;
- des moyens d'amenée de fil permettant d'acheminer le fil (4) fusible entre ladite source (11) de fil fusible et ledit corps de torche (1), lesdits moyens d'amenée de fil comportant au moins une gaine (5) formant manchon autour d'au moins une partie dudit fil (4) et à l'intérieur de laquelle est acheminée ledit fil (4) fusible ;
- des premiers moyens d'acheminement de gaz pour acheminer le premier flux gazeux (G1) entre ladite première source dudit premier gaz (G1) et un site localisé en amont du corps de torche (1) ou à proximité de l'extrémité amont de ladite gaine (5) entourant le fil 4) ;
- des second moyens d'acheminement de gaz pour acheminer le deuxième flux gazeux (G2) entre ladite deuxième source dudit deuxième gaz (G2) et la buse (2) de distribution de gaz équipant le corps (1) de torche.

11. Procédé pour améliorer la pénétration de la soudure et le mouillage du cordon de soudure lors d'une opération de soudage MIG de pièces en aluminium ou en alliages d'aluminium mettant en oeuvre une torche de soudage comportant un corps de torche muni d'une buse de distribution de gaz et d'un tube-contact agencé dans le corps de torche et débouchant à l'intérieur de ladite buse de distribution, dans lequel :
(a) on alimente le tube-contact avec un premier flux gazeux constitué d'argon, d'oxygène ou d'un mélange d'argon et d'oxygène ; et
(b) on alimente la buse de distribution avec un deuxième flux gazeux constitué d'argon ou d'un mélange d'argon et d'hélium de manière à distribuer le deuxième flux gazeux approximativement périphériquement et concentriquement audit premier flux gazeux de protection et à constituer une atmosphère gazeuse de protection formée desdits flux gazeux pour protéger au moins une partie de la zone de soudage.
